# EUROPEAN PATENT APPLICATION

(11) **EP 4 411 923 A1**
(43) Date of publication of application: **07.08.2024**
(21) Application number: 22875637.5
(22) Date of filing: 18.08.2022
(51) Int. Cl.: H01M 10/0567, H01M 4/36, H01M 4/38, H01M 4/48, H01M 4/58, H01M 4/62

(54) **NON-AQUEOUS ELECTROLYTE SECONDARY BATTERY**

(30) Priority: 30.09.2021 JP 2021161383
(71) Applicant: Panasonic Intellectual Property Management Co., Ltd., Kadoma-shi, Osaka 571-0057 (JP)
(72) Inventor: ISHIGURO Tasuku, Kadoma-shi, Osaka 571-0057 (JP); TAKEDA Nanami, Kadoma-shi, Osaka 571-0057 (JP); SATO Yosuke, Kadoma-shi, Osaka 571-0057 (JP)
(74) Representative: Novagraaf International SA
(86) International application number: PCT/JP2022/031271
(87) International publication number: WO 2023/053764

(57) **Abstract**

Disclosed is a non-aqueous electrolyte secondary battery including: a negative electrode that contains a negative electrode material mixture; a separator; a positive electrode that is provided to oppose the negative electrode via the separator; and a non-aqueous electrolyte. The negative electrode material mixture contains a negative electrode active material. The negative electrode active material contains 3 mass% or more of a silicon-containing material. The silicon-containing material contains carbon composite particles. The carbon composite particles have a carbon phase and a silicon phase dispersed in the carbon phase. The non-aqueous electrolyte contains a 5- or 6-membered cyclic compound component that contains a sulfur element as a ring-constituting element.

## Description

### [Technical Field]

The present disclosure relates to a non-aqueous electrolyte secondary battery.

### [Background Art]

A non-aqueous electrolyte secondary battery as typified by a lithium ion secondary battery includes a positive electrode, a negative electrode, and a non-aqueous electrolyte. As the non-aqueous electrolyte, a non-aqueous electrolyte solution is mainly used. The negative electrode contains a negative electrode material mixture that contains a negative electrode active material. As the negative electrode active material, a material capable of electrochemically absorbing and desorbing lithium ions is used. Examples of the material capable of electrochemically absorbing and desorbing lithium ions include a carbonaceous material, a silicon-containing material, and the like. The negative electrode material mixture may further contain, as a conductive agent, a carbonaceous material that does not absorb and desorb lithium ions such as carbon fibers or carbon nanotubes.

Patent Literature 1 proposes a lithium ion secondary battery in which a composite electrode material is used, wherein the composite electrode material contains particles that contain an element capable of absorbing and desorbing lithium ions, carbon particles capable of absorbing and desorbing lithium ions, multi-walled carbon nanotubes, and carbon nanofibers.

From the viewpoint of improving a negative electrode that contains an alloy-based active material, Patent Literature 2 proposes a negative electrode for a non-aqueous electrolyte secondary battery that includes a negative electrode current collector and a negative electrode active material layer that is supported on a surface of the negative electrode current collector and contains an alloy-based active material that absorbs and desorbs lithium ions, wherein the negative electrode further includes a resin layer on a surface of the negative electrode active material layer, the resin layer containing a lithium ion conductive resin component and an additive for a non-aqueous electrolyte.

### [Citation List]

### [Patent Literatures]

[PTL 1] Laid-Open Patent Publication No. 2014-146519
[PTL 2] WO 2010/092815

### [Summary of Invention]

### [Technical Problem]

Silicon-containing materials undergo a large volume change during absorbing and desorbing lithium ions. In particular, carbon composite particles that have a carbon phase and a silicon phase dispersed in the carbon phase undergo a very large volume change because the carbon composite particles have a large discharge capacity and a high active material utilization rate. For this reason, each time charge and discharge are repeated, it is likely that the carbon composite particles are broken and new surfaces are formed. In a new surface, a side reaction with an electrolyte solution is likely to take place, and the capacity decreases during repetition of charge and discharge, as a result of which the capacity retention rate decreases, and the cycle characteristics decrease.

### [Solution to Problem]

One aspect of the present disclosure relates to a non-aqueous electrolyte secondary battery including: a negative electrode that contains a negative electrode material mixture; a separator; a positive electrode that is provided to oppose the negative electrode via the separator; and a non-aqueous electrolyte, wherein the negative electrode material mixture contains a negative electrode active material, the negative electrode active material contains 3 mass% or more of a silicon-containing material, the silicon-containing material contains carbon composite particles, the carbon composite particles have a carbon phase and a silicon phase dispersed in the carbon phase, and the non-aqueous electrolyte contains a 5- or 6-membered cyclic compound component that contains a sulfur element as a ring-constituting element.

### [Advantageous Effects of Invention]

In a non-aqueous electrolyte secondary battery that includes a negative electrode that contains carbon composite particles that have a silicon phase, the reduction in the cycle characteristics can be suppressed.

### [Brief Description of Drawing]

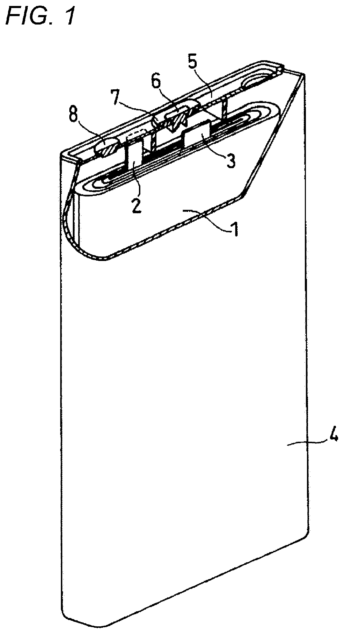

[FIG. 1] Fig. 1 is a partially cutaway perspective view of a non-aqueous electrolyte secondary battery according to one embodiment of the present disclosure.

### [Description of Embodiment(s)]

Novel features of the present invention are set forth in the appended claims. However, the present invention will be well understood from the following detailed description of the present invention with reference to the drawings, in terms of both the configuration and the content together with other objects and features of the present invention.

In a non-aqueous electrolyte secondary battery, a carbonaceous material such as graphite is commonly used as a negative electrode active material. When a silicon-containing material is used, theoretically, it is possible to obtain a capacity higher than that obtained when a carbonaceous material is used. However, the volume change during absorbing and desorbing lithium ions is large, and it is likely that the active material particles are broken and new surfaces are formed. In a new surface, a side reaction with a non-aqueous electrolyte is likely to take place, and the capacity decreases. For this reason, even if a silicon-containing material is used, the capacity retention rate during repetition of charge and discharge decreases, and it is therefore difficult to ensure a sufficient service life. In particular, it is ideal to use carbon composite particles that have a carbon phase and a silicon phase dispersed in the carbon phase from the viewpoint of obtaining a high capacity, especially because a high active material utilization rate and a large discharge capacity can be obtained. However, when charge and discharge are repeated, due to the volume change of the silicon phase, not only the silicon phase but also the carbon phase that constitutes a matrix is also likely to be broken. For this reason, when carbon composite particles that have a silicon phase are used, more new surfaces are formed as compared with when a carbonaceous material that does not have a silicon phase is used. Accordingly, when charge and discharge are repeated, the capacity retention rate decreases, and the cycle characteristics are likely to decrease.

In view of the above, (1) a non-aqueous electrolyte secondary battery according to the present disclosure includes: a negative electrode that contains a negative electrode material mixture; a separator; a positive electrode that is provided to oppose the negative electrode via the separator; and a non-aqueous electrolyte. The negative electrode material mixture contains a negative electrode active material. The negative electrode active material contains 3 mass% or more of a silicon-containing material. The silicon-containing material contains carbon composite particles. The carbon composite particles have a carbon phase and a silicon phase dispersed in the carbon phase. The non-aqueous electrolyte contains a 5- or 6-membered cyclic compound component that contains a sulfur element as a ring-constituting element. Hereinafter, the 5- or 6-membered cyclic compound component that contains a sulfur element as a ring-constituting element may also be referred to simply as "S-containing cyclic compound component". Also, the silicon-containing material may also be referred to as "Si-containing material", and the silicon phase may also be referred to as "Si phase".

According to the present disclosure, by using the non-aqueous electrolyte that contains the S-containing cyclic compound component, in the case where the negative electrode contains the silicon-containing material that contains carbon composite particles that have a Si phase, even when charge and discharge are repeated, the reduction in the capacity retention rate can be suppressed, and the reduction in the cycle characteristics can be suppressed. This is considered to be because, even when new surfaces are formed as a result of the silicon-containing material including the carbon composite particles being broken during charge and discharge, due to the S-containing cyclic compound component, a coating is formed on the surface of the negative electrode active material, and thus a side reaction is suppressed. From the foregoing, it can be considered that the coating formed on the surfaces, including the new surfaces, of the silicon-containing material that contains carbon composite particles by action of the S-containing cyclic compound component is a low resistant coating that is unlikely to inhibit charge and discharge reactions. Also, according to the present disclosure, by using the silicon-containing material that contains carbon composite particles as the negative electrode, it is possible to ensure a high initial discharge capacity.

In the case where a Si phase-free carbonaceous material is used as the negative electrode active material, even when a non-aqueous electrolyte that contains a S-containing cyclic compound component is used, the initial discharge capacity and the capacity retention rate during repetition of charge and discharge are almost unchanged as compared with those when a non-aqueous electrolyte that does not contain a S-containing cyclic compound component is used. That is, it can be said that, when the case where a Si phase-free carbonaceous material is used as the negative electrode active material is compared with the case where Si phase-containing carbon composite particles are used as the negative electrode active material, the influence of the S-containing cyclic compound component on the behaviors of cycle characteristics varies significantly.
(2) In the feature (1) described above, the silicon-containing material may further contain a silicon oxide.
(3) In the feature (1) or (2) described above, the silicon-containing material may further contain silicate composite particles, and the silicate composite particles may have a silicate phase and a silicon phase dispersed in the silicate phase.
(4) In any one of the features (1) to (3) described above, the cyclic compound component may incude a cyclic compound that contains the sulfur element as the ring-constituting element and has a carbon-carbon unsaturated bond.
(5) In any one of the features (1) to (4) described above, the cyclic compound component may contain 1,3-propenesultone.
(6) In any one of the features (1) to (5) described above, the concentration of the cyclic compound component in the non-aqueous electrolyte may be 2 mass% or less.
(7) In any one of the features (1) to (6) described above, the negative electrode material mixture may further contain carbon nanotubes.
(8) In any one of the features (1) to (7) described above, the non-aqueous electrolyte may further contain a fluoroethylene carbonate.

Hereinafter, the constituent elements of the non-aqueous electrolyte secondary battery according to the present disclosure will be specifically described one by one including the features (1) to (8) descrived above. At least one of the features (1) to (8) described above and at least one of the elements described below may be combined as long as there is no technical contradiction.

### (Negative Electrode)

The negative electrode includes a negative electrode material mixture. The negative electrode may include a negative electrode material mixture and a negative electrode current collector that holds the negative electrode material mixture. The negative electrode usually includes a negative electrode material mixture in the form of a layer (hereinafter referred to as "negative electrode material mixture layer"). The negative electrode material mixture contains at least a negative electrode active material. The negative electrode material mixture may further contain at least one selected from the group consisting of a binder and a thickener, and the like. The negative electrode material mixture may further contain a conductive agent, and the like.

### (Negative Electrode Material Mixture)

### (Negative Electrode Active Material)

The negative electrode active material contains at least a Si-containing material. The Si-containing material contains at least carbon composite particles described above. The negative electrode may contain, as the negative electrode active material, a material other than the Si-containing material.

### (Si-Containing Material)

The carbon composite particles contained in the Si-containing material have a carbon phase and a Si phase dispersed in the carbon phase. The carbon phase is electron conductive. Accordingly, even when cracks occur in the carbon composite particles due to expansion and contraction of the Si phase, the carbon phase is unlikely to be isolated, and it is therefore easy to maintain contact points between the carbon composite particles and their surroundings. Accordingly, the reduction in the cycle characteristics is easily suppressed.

The carbon phase may be made of, for example, shapeless carbon (or in other words, amorphous carbon) or crystalline carbon. The shapeless carbon may be, for example, hard carbon, soft carbon, or any other carbon. As used herein, the term "shapeless carbon" commonly refers to a carbonaceous material that has an average interplanar spacing d002 of the (002) plane measured using X-ray diffractometry of greater than 0.340 nm. As the crystalline carbon, carbon that has a graphite-type crystal structure such as graphite may be used. The term "crystalline carbon" such as graphite refers to a carbonaceous material that has an average interplanar spacing d002 of the (002) plane of 0.340 nm or less (for example, 0.3354 nm or more and 0.340 nm or less).

The content of the Si phase in the carbon composite particles may be, for example, 30 mass% or more and 80 mass% or less, or 40 mass% or more and 70 mass% or less. When the content of the Si phase is within the above-described range, a higher initial capacity can be obtained, and the reduction in the cycle characteristics is easily reduced. Also, by containing the carbon phase in a relatively large amount, even when particles are broken due to charge and discharge, the carbon phase easily enters into voids formed by the particles being broken, and thus the conductive paths in the negative electrode material mixture are easily maintained.

The content of the carbon composite particles in the negative electrode active material may be, for example, 3 mass% or more, 4 mass% or more, or 5 mass% or more. When the content of the carbon composite particles is within the above-described range, the influence of volume change during absorbing and desorbing lithium ions on the side reaction that take place in the new surfaces is likely to appear. For this reason, the advantageous effect obtained by using the non-aqueous electrolyte that contains a S-containing cyclic compound component remarkably appears. From the viewpoint of ensuring higher cycle characteristics, the content of the carbon composite particles in the negative electrode active material is, for example, 10 mass% or less.

The carbon composite particles can be obtained by, for example, pulverizing a mixture of a carbon source and a raw silicon material into fine particles while stirring the mixture using a ball mill or the like, and then subjecting the mixture to heat treatment in an inert atmosphere. Examples of the carbon source that can be used include: petroleum resins such as coal tar pitch, petroleum pitch, and tar: saccharides such as carboxymethyl cellulose (CMC), polyvinyl pyrrolidone, cellulose, and sucrose; and water soluble resins. When mixing a carbon source and a raw silicon material, for example, the carbon source and the raw silicon material may be dispersed in a dispersion medium such as alcohol. After the mixture that has undergone milling is dried, the mixture is heated at a temperature of, for example, 600°C or more and 1000°C or less in an inert gas atmosphere to carbonize the carbon source. In this way, the carbon phase is formed.

As the Si-containing material other than the carbon composite particles, a simple substance of silicon, a silicon alloy, a silicon compound, or the like can be used.

The Si-containing material may contain composite particles other than the carbon composite particles. As the composite particles, for example, composite particles in which a Si phase (fine Si phase) is dispersed in a lithium ion conducting phase (matrix) can be used. In the case where the Si-containing material contains the above-described composite particles, an even higher capacity can be obtained, and the advantageous effect of suppressing the reduction in the cycle characteristics can be enhanced.

The lithium ion conducting phase preferably has at least one selected from the group consisting of a SiO₂ phase and a silicate phase. The lithium ion conducting phase may further has a carbon phase. The lithium ion conducting phase can form an amorphous phase. However, not only in this case, for example, at least a portion of each of the silicate phase and the carbon phase may be a crystalline phase that contains a crystalline silicate, crystalline carbon as described in the description of the carbon composite particles, or the like. Specific examples of the composite particles include: composite particles that have a SiO₂ phase and a Si phase dispersed in the SiO₂ phase; and composite particles (silicate composite particles) that have a silicate phase and a Si phase dispersed in the silicate phase. However, the composite particles are not limited to the specific examples described above.

The SiO₂ phase is an amorphous phase that contains 95 mass% or more of silicon dioxide. Composite particles that have a Si phase dispersed in a SiO₂ phase are represented by SiOₓ, where x may be, for example, 0.5 ≤ x < 2, or 0.8 ≤ x ≤ 1.6. SiOₓ can be obtained by, for example, subjecting silicon monoxide to heat treatment and separating into a SiO₂ phase and a fine Si phase by a disproportionation reaction. When the SiOₓ particles are subj ected to cross-section observation using a transmission electron microscope (TEM), the Si phase dispersed in the SiO₂ phase can be confirmed. In the specification of the present application, the composite particles described above may also be referred to as "silicon oxide". In the case where the negative electrode active material contains a silicon oxide, a higher initial discharge capacity is easily ensured.

The silicate phase preferably contains at least either one of an alkali metal element (a group 1 element other than hydrogen in the long-period periodic table) and a group 2 element in the long-period periodic table. Examples of the alkali metal element include lithium (Li), potassium (K), sodium (Na), and the like. Examples of the group 2 element include magnesium (Mg), calcium (Ca), strontium (Sr), barium (Ba), and the like. The lithium silicate phase may have a composition represented by the formula: Li_{2y}SiO_{2+y} (where 0 < y < 2). y may be 1/2 or 1. The silicate composite particles in which the Si phase is dispersed in the silicate phase can be obtained by, for example, pulverizing a mixture of a silicate and a raw silicon material into fine particles while stirring the mixture using a ball mill or the like, and then subjecting the mixture to heat treatment in an inert atmosphere.

The content of the Si phase dispersed in the silicate phase may be, 30 mass% or more and 95 mass% or less, or 35 mass% or more and 75 mass% or less of the entire silicate composite particles.

The Si-containing material may contain the carbon composite particles alone or a combination of the carbon composite particles and at least one selected from other Si-containing materials. The Si-containing material may contain, in addition to the carbon composite particles, for example, at least one selected from the group consisting of a silicon oxide and silicate composite particles.

The content of silicon oxide in the negative electrode active material may be, for example, 0.1 mass% or more, 0.5 mass% or more, or 1 mass% or more. In this case, the initial discharge capacity can be further increased. The content of silicon oxide in the negative electrode active material is, for example, 5 mass% or less.

The content of the silicate composite particles in the negative electrode active material may be, for example, 0.1 mass% or more, 0.5 mass% or more, or 1 mass% or more. In this case, a higher initial discharge capacity can be ensured, and the reduction in the capacity retention rate can be further suppressed. The content of the silicate composite particles in the negative electrode active material is, for example, 5 mass% or less.

The composition of the Si-containing material can be determined by, for example, obtaining a backscattered electron image of a cross section of the negative electrode material mixture layer using a field emission scanning electron microscope (FE-SEM), observing the particles of the Si-containing material, and performing elemental analysis on the particles of the Si-containing material observed. For example, the battery is disassembled to take out the negative electrode from the battery, and the negative electrode is cleaned with a non-aqueous solvent such as ethylene carbonate, and then dried. After that, cross section processing is performed on the negative electrode material mixture layer using a cross section polisher (CP). In this way, a sample is obtained. A cross-section of the sample is captured using a FE-SEM to obtain a backscattered electron image. For elemental analysis, for example, electron probe micro analyzer (EPMA) analysis or the like is used. Qualitative and quantitative analysis of elements may be performed using an auger electron spectroscopy (AES) analysis apparatus. The composition of the lithium ion conducting phase can also be determined by performing the above-described analysis. The composition of the carbon phase can be confirmed based on the average interplanar spacing d002 determined based on X-ray diffractometry.

The Si-containing material is usually a particulate material. The Si-containing material may have a median particle size (D50) of, for example, 1 µm or more and 25 µm or less, or 4 µm or more and 15 µm or less. When the Si-containing material has a median particle size within the above-described range, a good battery performance is likely to be obtained.

In the specification of the present application, the term "median particle size (D50)" refers to a particle size (volume median particle size) at 50% cumulative volume in a particle size distribution obtained through measurement performed based on a laser diffraction scattering method. As the measurement apparatus, for example, LA-750 available from HORIBA Ltd. can be used. The median particle size of the Si-containing material may be determined from a cross-sectional sample of the negative electrode formed to obtain a FE-SEM backscattered electron image. For each of ten or more particles of the Si-containing material in the cross section, the equivalent circle diameter is determined, and the average value is defined as the median particle size. As used herein, the term "equivalent circle diameter" refers to the diameter of a circle that has the same area as the area of a particle observed in a cross-section of the negative electrode.

The Si phase dispersed in the carbon phase is usually composed of a plurality of crystallites. The crystallites of the Si phase have a crystallite size of, for example, 500 nm or less, and may be 30 nm or less. The lower limit value of the crystallite size of the crystallites of the Si phase is not particularly limited, but may be, for example, 5 nm or more. The crystallite size is calculated from a half width of a diffraction peak attributed to the Si (111) plane in a X-ray diffraction (XRD) pattern of the Si phase using the Scherrer equation.

The content of the Si phase in the composite particles can be determined from, for example, Si-NMR. Hereinafter, desirable measurement conditions for Si-NMR will be described.
Measurement apparatus: a solid-state nuclear magnetic resonance spectrum measurement apparatus (INOVA-400) available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec
Observation amplitude: 100 kHz
Observation center: near -100 ppm
Signal capture time: 0.05 sec
Cumulative count: 560
Sample amount: 207.6 mg

From the viewpoint of improving conductivity, at least a portion of the surface of the particles of the Si-containing material may be covered with a conductive layer. The conductive layer contains a conductive material such as conductive carbon. The amount of the conductive layer that covers at least a portion of the surface of the particles of the Si-containing material is, for example, 1 part by mass or more and 10 parts by mass or less per 100 parts by mass of the total of the particles of the Si-containing material and the conductive layer. The particles of the Si-containing material that have the conductive layer on the surface thereof can be obtained by, for example, mixing coal tar pitch or the like with the particles of the Si-containing material, and subjecting the mixture to heat treatment in an inert atmosphere.

The content of the Si-containing material in the negative electrode active material is 3 mass% or more, preferably 4 mass% or more, and may be 5 mass% or more. When the content of the Si-containing material is within the above-described range, a high initial capacity can be obtained, but the cycle characteristics are likely to decrease. According to the present disclosure, even in this case, by using a non-aqueous electrolyte that contains the S-containing cyclic compound component, a high level of cycle characteristics can be ensured. The ratio of the Si-containing material is, for example, 15 mass% or less, and may be 10 mass% or less. These lower and upper limit values can be combined in any way.

### (Another Negative Electrode Active Material)

As a negative electrode active material other than the Si-containing material, for example, at least one selected from the group consisting of a Si phase-free carbonaceous material, a Sn simple substance, a Sn alloy, and a Sn compound (a Sn oxide, or the like) can be used. The Si-containing material expands and contracts in volume during charge and discharge. For this reason, when the ratio of the Si-containing material in the negative electrode active material is large, a contact failure is likely to occur between the negative electrode active material and the negative electrode current collector during charge and discharge. A carbonaceous material expands and contracts less during charge and discharge than the Si-containing material. By using the Si-containing material and the carbonaceous material in combination, when charge and discharge are repeated, the contact state between negative electrode active material particles and the contact state between the negative electrode material mixture and the negative electrode current collector can be maintained at a more favorable level. Accordingly, by using the Si-containing material and the Si phase-free carbonaceous material in combination, excellent cycle characteristics are likely to be obtained while imparting a high capacity of the Si phase to the negative electrode.

As the carbonaceous material, for example, graphite, graphitizable carbon (soft carbon), or non-graphitizable carbon (hard carbon) can be used. These carbonaceous materials may be used alone or in a combination of two or more.

Among the carbonaceous materials listed above, in particular, it is preferable to use graphite because it has excellent charge/discharge stability and a small irreversible capacity. Examples of the graphite include natural graphite, artificial graphite, and graphitized mesophase carbon particles. The graphite particles may partially contain amorphous carbon, graphitizable carbon, or non-graphitizable carbon.

As used herein, the term "graphite" refers to a carbonaceous material that has a developed graphite-type crystal structure. The average interplanar spacing d002 of the (002) plane of the graphite determined through measurement performed based on X-ray diffractometry may be, for example, 0.340 nm or less, or 0.3354nm or more and 0.340 nm or less. Also, the crystallite size Lc (002) of the graphite may be, for example, 5 nm or more, or 5nm or more and 200 nm or less. The crystallite size Lc (002) is determined through measurement performed based on, for example, the Scherrer method. When the average interplanar spacing d002 of the (002) plane and the crystallite size Lc (002) of the graphite are within the above-described ranges, a high capacity is likely to be obtained.

The ratio of the total amount of the Si-containing material and the carbonaceous material (Si phase-free carbonaceous material) in the negative electrode active material is preferably 90 mass% or more, or may be 95 mass% or more or 98 mass% or more. The ratio of the total amount of the Si-containing material and the carbonaceous material in the negative electrode active material is 100 mass% or less. The negative electrode active material may be composed only of the Si-containing material and the carbonaceous material.

### (Binder)

As the binder, for example, a resin material is used. Examples of the binder include: fluorine resins (for example, polytetrafluoroethylene and polyvinylidene fluoride), polyolefin resins (for example, polyethylene and polypropylene), polyamide resins (for example, aramid resin), polyimide resins (for example, polyimide and polyamide imide), acrylic resins (for example, polyacrylic acid, polymethacrylic acid, an acrylic acid-methacrylic acid copolymer, an ethylene-acrylic acid copolymer, or salts thereof), vinyl resins (for example, polyvinyl acetate), and rubbery materials (for example, a styrene-butadiene copolymer rubber (SBR)). These binders may be used alone or in a combination of two or more.

### (Thickener)

As the thickener, for example, a cellulose derivative such as cellulose ether can be used. Examples of the cellulose derivative include CMC, a modified form thereof, methyl cellulose, and the like. Modified forms of CMC also include a salt of CMC. As the salt, an alkali metal salt (for example, a sodium salt), an ammonium salt, or the like can be used. These thickeners may be used alone or in a combination of two or more.

### (Conductive Agent)

As the conductive agent, for example, conductive fibers or conductive particles can be used. Examples of the conductive fibers include carbon fibers, metal fibers, and the like. Examples of the carbon fibers also include carbon nanotubes (CNTs). Examples of the conductive particles include conductive carbon (carbon black or the like), a metal powder, and the like. These conductive agents may be used alone or in a combination of two or more.

The Si-containing material undergoes a large volume change due to expansion and contraction during charge and discharge. In the case where the negative electrode material mixture contains CNTs, due to expansion and contraction of the Si-containing material, even when particles are broken, disconnection of conductive paths is suppressed by the CNTs, and a higher level of cycle characteristics is likely to be obtained. Particularly when the content of the Si-containing material in the negative electrode active material is large (for example, 4 mass% or more), the advantageous effect of the CNTs appears remarkably.

The CNTs are a carbonaceous material with a nano-size diameter that has a structure in which a 6-membered ring network sheet (graphene) formed by carbon atoms is wound into a tubular shape. The CNTs have excellent conductivity. The CNTs in which the number of graphene layers that constitute the tubular structure is one are called "single-walled carbon nanotubes (SWCNTs)". The CNTs in which the number of graphene layers that constitute the tubular structure is two or more are called "multi-walled carbon nanotubes (MWCNTs)".

The CNTs preferably include the SWCNTs. In this case, a higher level of cycle characteristics is likely to be ensured.

The proportion of the SWCNTs to the CNTs is, for example, 50% or more, and may be 75% or more, or 90% or more. The proportion of the SWCNTs to the CNTs is 100% or less. As used herein, the term "the proportion of the SWCNTs to the CNTs" refers to the ratio of the number of SWCNTs relative to the total number of CNTs.

Whether the negative electrode material mixture contains the CNTs can be confirmed by, for example, observing an image of a cross section of the negative electrode material mixture layer using a scanning electron microscope (SEM).

The proportion of the SWCNTs to the CNTs in the negative electrode material mixture is determined using the following method.

An image of a cross section of the negative electrode material mixture layer or an image of the CNTs is obtained using a SEM. In the SEM image, a plurality of (for example 50 or more and 200 or less) CNTs are arbitrarily selected and observed. Then, the number of SWCNTs is counted, and the proportion of the number of SWCNTs relative to the total number of CNTs selected is calculated.

The quantitative analysis of the CNTs is performed by a combination of, for example, Raman spectroscopy and thermogravimetry.

From the viewpoint of reducing the disconnection of the conductive paths during charge and discharge, the CNTs have an average diameter of, for example, 1nm or more and 10 nm or less, and may be 1 nm or more and 5 nm or less.

From the viewpoint of reducing the disconnection of the conductive paths during charge and discharge, the CNTs has an average length of, for example, 1 µm or more and 100 µm or less, and may be 5 µm or more and 20 µm or less.

The average length and the average diameter of the CNTs can be determined from an image of a cross section of the negative electrode material mixture layer or an image of the CNTs using at least one of a SEM and a TEM. More specifically, in a captured image, a plurality of (for example, 50 or more and 200 or less) CNTs are arbitrarily selected. Then, the length and the diameter of the CNTs are measured, and the measured lengths and the measured diameters are averaged to obtain an average length and an average diameter. As used herein, the term "the length of the CNTs" refers to the length of the CNTs measured when the CNTs are straightened.

The content of the CNTs in the negative electrode material mixture is, for example, 0.005 mass% or more and 1 mass% or less, and may be 0.01 mass% or more and 1 mass% or less, or 0.01 mass% or more and 0.05 mass% or less. When the content of the CNTs in the negative electrode material mixture is within the above-described range, the effect of improving the conductivity of the negative electrode and the effect of improving the capacity retention rate at the initial charge/discharge cycle can be enhanced.

### (Negative Electrode Current Collector)

The negative electrode current collector is selected according to the type of non-aqueous electrolyte secondary battery. As the negative electrode current collector, for example, a sheet-shaped current collector can be used. As the current collector, a metal foil or the like may also be used. Also, as the current collector, a porous current collector may also be used. Examples of the porous current collector include a mesh, a punched sheet, and an expanded metal.

Examples of the material of the negative electrode current collector include stainless steel, nickel, a nickel alloy, copper, and a copper alloy.

The thickness of the negative electrode current collector is, but is not particularly limited thereto, for example, 1 µm or more and 50 µm or less, and may be 5 µm or more and 30 µm or less.

### (Others)

The negative electrode can be formed by applying, for example, a negative electrode slurry prepared by dispersing constituent components of a negative electrode material mixture in a dispersion medium onto the surface of the negative electrode current collector, and drying the formed coating film. The coating film after drying may be rolled as needed.

There is no particular limitation on the dispersion medium. Examples of the dispersion medium include water, an alcohol (for example, ethanol), an ether (for example, tetrahydrofuran), an amide (for example, dimethylformamide), N-methyl-2-pyrrolidone (NMP), and mixed solvents thereof.

### (Positive Electrode)

The positive electrode may include a positive electrode current collector and a positive electrode material mixture layer supported on a surface of the positive electrode current collector. The positive electrode material mixture layer can be formed by applying a positive electrode slurry prepared by dispersing a positive electrode material mixture in a dispersion medium onto the surface of the positive electrode current collector, and drying the formed coating film. The coating film after drying may be rolled as needed. The positive electrode material mixture may contain a positive electrode active material as an essential component, and may also contain a binder, a conductive agent, and the like as optional components. The dispersion medium can be selected from among, for example, the dispersion media listed as examples of the dispersion medium that can be used in the negative electrode.

As the positive electrode active material, for example, a composite oxide that contains lithium and a transition metal can be used. Examples of the transition metal include Ni, Co, Mn, and the like. Examples of the composite oxide that contains lithium and a transition metal include LiₐCoO₂, LiₐNiO₂, LiₐMnO₂, LiₐCo_{b1}Ni_{1-b1}C₂, LiₐCo_{b1}M_{1-b1}O_{c1}, LiₐNi_{1-b1}M_{b1}O_{c1}, LiₐMn₂O₄, and LiₐMn_{2-b1}M_{b1}O₄. Here, a = 0 to 1.2, b1 = 0 to 0.9, and c1 = 2.0 to 2.3. M represents at least one selected from the group consisting of Na, Mg, Sc, Y, Mn, Fe, Co, Ni, Cu, Zn, Al, Cr, Pb, Sb, and B. The value of a that represents the molar ratio of lithium varies due to charging and discharging.

Among these, it is preferable to use a lithium nickel composite oxide represented by LiₐNi_{b2}M_{1-b2}O₂ (where 0 < a ≤ 1.2, 0.3 ≤ b2 ≤ 1, and M represents at least one selected from the group consisting of Mn, Co, and Al). From the viewpoint of achieving a high capacity, it is more preferable that 0.8 ≤ b2 ≤ 1 or 0.85 ≤ b2 ≤ 1 is satisfied. From the viewpoint of stability of the crystal structure, it is more preferable to use LiₐNi_{b2}Co_{c2}Al_{d}O₂ (where 0 < a ≤ 1.2, 0.8 ≤ b2 < 1, 0 < c2 < 0.2 (or 0 < c2 ≤ 0.18), 0 < d ≤ 0.1, and b2 + c2 + d = 1).

As the binder, any of the resin materials listed as examples of the binder in the description of the negative electrode can be used. As the conductive agent, for example, it is possible to select any from the conductive agents listed as examples of the conductive agent in the description of the negative electrode. As the conductive agent, graphite may also be used.

The shape and the thickness of the positive electrode current collector can be selected from the shapes and the thickness value range that conform to those of the negative electrode current collector. The positive electrode current collector may be made using a material such as, for example, stainless steel, aluminum, an aluminum alloy, or titanium.

### (Separator)

It is usually desirable to provide a separator between the positive electrode and the negative electrode. The separator has high ion permeability, an appropriate mechanical strength, and insulation properties. As the separator, for example, a micro-porous thin film, a woven fabric, or a non-woven fabric can be used. The separator may have a single-layer structure or a muti-layer structure. As the separator that has a muti-layer structure, a stacked body that includes, as layers, at least two selected from a micro-porous thin film, a woven fabric, and a non-woven fabric may be used. As the material of the separator, it is preferable to use a polyolefin (for example, polypropylene or polyethylene).

### (Non-Aqueous Electrolyte)

The non-aqueous electrolyte is usually used in the form of a liquid, but may be used in a state in which the flowability is limited by a gelling agent or the like. The non-aqueous electrolyte usually contains a non-aqueous solvent, a lithium salt dissolved in the non-aqueous solvent, and an additive. In the present disclosure, the non-aqueous electrolyte contains a S-containing cyclic compound component. The non-aqueous electrolyte may further contain an additive other than the S-containing cyclic compound component.

### (Non-Aqueous Solvent)

As the non-aqueous solvent, for example, a cyclic carbonic acid ester, a linear carbonic acid ester, a cyclic carboxylic acid ester, or a linear carboxylic acid ester can be used. Examples of the cyclic carbonic acid ester include propylene carbonate (PC), ethylene carbonate (EC), fluoroethylene carbonate (FEC), vinylene carbonate (VC), and the like. Examples of the linear carbonic acid ester include diethyl carbonate (DEC), ethyl methyl carbonate (EMC), dimethyl carbonate (DMC), and the like. Examples of the cyclic carboxylic acid ester include γ-butyrolactone (GBL), γ-valerolactone (GVL), and the like. Examples of the linear carboxylic acid ester include methyl formate, ethyl formate, propyl formate, methyl acetate (MA), ethyl acetate, propyl acetate, methyl propionate, ethyl propionate, propyl propionate, and the like. The non-aqueous electrolyte may contain one or a combination of two or more of the non-aqueous solvents.

### (Lithium Salt)

As the lithium salt, for example, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, a lithium lower aliphatic carboxylate, LiCl, LiBr, LiI, a phosphoric acid salt, a boric acid salt, or an imide salt can be used. Examples of the phosphoric acid salt include lithium difluorophosphate (LiPO₂F₂), lithium difluorobis(oxalato)phosphate (LiDFBOP), lithium tetrafluoro(oxalato)phosphate, and the like. Examples of the boric acid salt include lithium bis(oxalato)borate (LiBOB), lithium difluoro(oxalato)borate (LiDFOB), and the like. Examples of the imide salt include lithium bis fluorosulfonyl imide (LiN(FSO₂)₂), lithium bis trifluoromethane sulphonyl imide (LiN(CF₃SO₂)₂), lithium trifluoro methanesulphonyl nonafluoro butanesulphonyl imide (LiN(CF₃SO₂)(C₄F₉SO₂)), lithium bis pentafluoroethane sulphonyl imide (LiN(C₂F₅SO₂)₂), and the like. The non-aqueous electrolyte may contain one or a combination of two or more of the lithium salts.

The concentration of the lithium salt in the electrolyte solution is, for example, 0.5 mol/L or more and 2 mol/L or less.

### (S-Containing Cyclic Compound Component)

The S-containing cyclic compound component is a cyclic compound component that contains a S element as a ring-constituting element. The cyclic compound contained in the S-containing cyclic compound component may contain, in addition to the S element that constitutes a ring, an oxygen element. The S-containing cyclic compound may contain, for example, either one or both of an oxygen atom as a ring-constituting element and an oxo group (= O) that is bonded to the ring as a substituent. The oxo group may be bonded to a carbon element that constitutes the ring, but is preferably bonded to the S element that constitutes the ring.

The S-containing cyclic compound as described above may be, for example, at least one selected from the group consisting of a sulfuric acid ester, a sulfurous acid ester, and a sulfonic acid ester. The sulfuric acid ester has a -O-S(= O)₂-O- structure. The sulfurous acid ester has a -O-S(= O)-O- structure. The sulfonic acid ester has a -S(= O)₂-O- structure. The cyclic compound also encompasses salts of these esters. Among these, it is preferable to use a cyclic sulfurous acid ester or a cyclic sulfonic acid ester.

Examples of the cyclic sulfuric acid ester include alkylene sulfate, alkenylene sulfate, and the like. Specific examples of the cyclic sulfuric acid ester include ethylene sulfate, propylene sulfate, trimethylene sulfate, butylenesulfate, and vinylene sulfate. The cyclic sulfurous acid ester may be, for example, at least one selected from the group consisting of alkylene sulfite and alkenylene sulfite. Specific examples of the cyclic sulfurous acid ester include ethylene sulfite, propylene sulfite, trimethylene sulfite, butylene sulfite, and vinylene sulfite. As the cyclic sulfonic acid ester, for example, at least one selected from the group consisting of alkanesultone and alkensultone may be used. Specific examples of the cyclic sulfonic acid ester include 1,3-propanesultone, 1,4-butanesultone, and 1,3-propenesultone.

One hydrogen atom or two or more hydrogen atoms contained in any one of the compounds listed above as examples of the S-containing cyclic compound may be substituted by a substituent. Examples of the substituent include an alkyl group, an alkenyl group, a hydroxyalkyl group, a hydroxy group, an alkoxy group, a halogen atom, and the like. The number of carbon atoms of the substituent may be 1 or more and 4 or less, or 1 or more and 3 or less. Examples of the halogen atom include a chlorine atom, a fluorine atom, and the like.

A S-containing ring contained in the S-containing cyclic compound is usually 5-or 6-membered.

The S-containing cyclic compound component may contain one or a combination of two or more of the S-containing cyclic compounds. The S-containing cyclic compound component preferably contains a S-containing cyclic compound that has a carbon-carbon unsaturated bond. The carbon-carbon unsaturated bond may constitute a portion of the S-containing ring, or the substituent of the S-containing ring may have a carbon-carbon unsaturated bond. The substituent as described above may be an alkenyl group (C₂₋₄alkenyl group or the like) such as a vinyl group or an allyl group. Specific examples of the S-containing cyclic compound include 1,3-propenesultone, vinylene sulfite, vinyl ethylene sulfite, and vinylene sulfate. In the case where the S-containing cyclic compound component contains at least 1,3-propenesultone, a coating that has an excellent film property is likely to be formed on the surfaces, including new surfaces, of the negative electrode active material particles, and a higher level of cycle characteristics can be obtained. The S-containing cyclic compound component may contain 1,3-propenesultone and another S-containing cyclic compound.

In the non-aqueous electrolyte secondary battery, the concentration of the S-containing cyclic compound component in the non-aqueous electrolyte may be, for example, 2 mass% or less or 1 mass% or less. The concentration of the S-containing cyclic compound component is a value determined for the non-aqueous electrolyte obtained from an initial non-aqueous electrolyte secondary battery. In the non-aqueous electrolyte secondary battery, the S-containing cyclic compound component is used to form the coating, and thus the concentration of the S-containing cyclic compound component in the non-aqueous electrolyte varies during the storage period or during the charge/discharge cycle period. For this reason, it is sufficient that the S-containing cyclic compound component remains in the non-aqueous electrolyte obtained from the initial non-aqueous electrolyte secondary battery at a concentration greater than or equal to the detection limit. The amount of the S-containing cyclic compound component in the electrolyte solution may be 0.01 mass% or more, 0.1 mass% or more, 0.25 mass% or more, or 0.5 mass% or more. The concentration of 1,3-propenesultone may be within the above-described range.

As used herein, the term "initial non-aqueous electrolyte secondary battery" refers to, for example, a non-aqueous electrolyte secondary battery that has been subjected to pre-charge/discharge (and optionally aging) after assembling the non-aqueous electrolyte secondary battery. A commercially available non-aqueous electrolyte secondary battery may be used as the initial non-aqueous electrolyte secondary battery. Then, the non-aqueous electrolyte may be obtained from the battery, and subjected to analysis.

The concentration of the S-containing cyclic compound component in the non-aqueous electrolyte used to produce the non-aqueous electrolyte secondary battery may be 0.1 mass% or more, 0.2 mass% or more, 0.25 mass% or more, or 0.5 mass% or more. The amount of the S-containing cyclic compound component in the electrolyte solution used to produce the non-aqueous electrolyte secondary battery is, for example, 2 mass% or less. The concentration of 1,3-propenesultone may be within the above-described range.

### (Others)

The non-aqueous electrolyte may contain an additive other than the S-containing cyclic compound component. Examples of the additive include a sulfur element-containing compound other than the above-described S-containing cyclic compound component, a phosphorus element-containing compound, a nitrogen-containing compound, vinyl ethylene carbonate, FEC, and an aromatic compound (cyclohexylbenzene, fluorobenzene, or the like). The sulfur element-containing compound (S-containing compound) may be at least one selected from the group consisting of a linear sulfuric acid ester (ethyl sulfate, methyl sulfate, or the like), a linear sulfurous acid ester, and a linear sulfonic acid ester. The S-containing compound also encompasses salts of these esters (an ethyl sulfate salt, a methyl sulfate salt, and the like). The non-aqueous electrolyte may contain one or a combination of two or more of the additives.

The non-aqueous electrolyte secondary battery preferably contains FEC. In this case, a higher level of cycle characteristics is likely to be obtained. FEC may be contained in a small amount (for example, 0.1 mass% or more and 2 mass% or less) as an additive, or maybe contained in a relatively large amount (for example, greater than 2 mass%) as a non-aqueous solvent in the non-aqueous electrolyte.

### (Others)

As an example of a structure of the non-aqueous electrolyte secondary battery, the non-aqueous electrolyte secondary battery may have a structure in which an electrode group formed by spirally winding a positive electrode and a negative electrode with a separator interposed therebetween is housed in an outer case together with a non-aqueous electrolyte. However, the structure of the non-aqueous electrolyte secondary battery is not limited thereto. For example, the electrode group may be a stacked electrode group formed by stacking a positive electrode and a negative electrode with a separator interposed therebetween. There is no particular limitation on the shape of the non-aqueous electrolyte secondary battery. The non-aqueous electrolyte secondary battery may have, for example, a cylindrical shape, a prismatic shape, a coin shape, a button shape, or a laminate shape.

Fig. 1 is a schematic partially cutaway perspective view of a rectangular non-aqueous electrolyte secondary battery according to one embodiment of the present disclosure. The non-aqueous electrolyte secondary battery includes a bottomed prismatic battery case 4, and an electrode group 1 and an electrolyte solution (not shown) housed in the battery case 4. The electrode group 1 includes an elongated strip-shaped negative electrode, an elongated strip-shaped positive electrode, and a separator interposed between the negative electrode and the positive electrode. A negative electrode current collector included in the negative electrode is electrically connected to a negative electrode terminal 6 provided in a sealing plate 5 via a negative electrode lead 3. The negative electrode terminal 6 is insulated from the sealing plate 5 by a resin gasket 7. A positive electrode current collector included in the positive electrode is electrically connected to the underside of the sealing plate via a positive electrode lead 2. That is, the positive electrode is electrically connected to the battery case 4 that also functions as a positive electrode terminal. The peripheral edge of the sealing plate 5 is fitted to an opening end portion of the battery case 4, and the fitted portion is laser welded. The sealing plate 5 has an injection hole for injecting an electrolyte solution, and the injection hole is closed by a sealing cap 8 after the electrolyte solution is injected.

### [Examples]

Hereinafter, the present invention will be described specifically based on examples and comparative examples. However, the present invention is not limited to the examples given below.

### <<Examples 1 to 3 and Comparative Examples 1 to 8»

In each of Examples 1 to 3 and Comparative Examples 1 to 8, a non-aqueous electrolyte secondary battery was produced and evaluated in the following procedure.

### (1) Production of Negative Electrode

An appropriate amount of water was added to a negative electrode material mixture, and mixed to obtain a negative electrode slurry. As the negative electrode material mixture, a mixture of a negative electrode active material, a binder, and a conductive agent was used.

As the negative electrode active material, components shown in Table 1 were used such that the content of each component in the entire negative electrode active material was a value shown in Table 1. Note that the content of each component in the negative electrode active material was calculated excluding the conductive layer.

As the negative electrode active material, the following components are shown in Table 1.
(a) Carbon composite particles: carbon composite particles including a carbon phase and a Si phase dispersed in the carbon phase, with the surfaces of the carbon composite particles being covered with a conductive layer containing conductive carbon (with a Si phase content of 50 mass% in the particles excluding the conductive layer, and a median particle size (D50) of 6 µm)
(b) Silicon oxide: SiOₓ particles (where x = 1, with a median particle size (D50) of 5 µm), with the surfaces of the SiOₓ particles being covered with a conductive layer containing conductive carbon
(c) Silicate composite particles: Li_{2y}SiO_{2+y} particles (where y = 0.5, with a median particle size (D50) of 10 µm), with the surfaces of the Li_{2y}SiO_{2+y} particles being covered with a conductive layer containing conductive carbon
(d) Graphite particles: with a median particle size (D50) of 25 µm

As the binder, sodium polyacrylate (PAA-Na), a sodium salt of CMC (CMC-Na), and SBR were used. As the conductive agent, CNTs (with an average diameter of about 1.6 nm and an average length of about 5 µm) containing 90% or more of SWCNTs was used.

The content of the CNTs in the negative electrode material mixture (in a dry solid) was set to 0.05 mass%. The amount of each of PAA-Na, CMC-Na, and SBR in the negative electrode material mixture was set to 1 mass% in a dry solid.

Next, the negative electrode slurry was applied to both surfaces of a copper foil, and the coating films were dried and then rolled to form a negative electrode material mixture layer (with a thickness of 80 µm and a density of 1.6 g/cm³) on each of the surfaces of the copper foil. In this way, a negative electrode was obtained.

### (2) Production of Positive Electrode

2.5 parts by mass of acetylene black, 2.5 parts by mass of polyvinylidene fluoride, and an appropriate amount of NMP were added to 95 parts by mass of lithiumcontaining composite oxide (LiNi_{0.8}Co_{0.18}Al_{0.02}O₂) and then mixed to obtain a positive electrode slurry. Next, the positive electrode slurry was applied to both surfaces of an aluminum foil, and the coating films were dried and then rolled to form a positive electrode material mixture layer (with a thickness of 95 µm and a density of 3.6 g/cm³) on each of the surfaces of the aluminum foil. In this way, a positive electrode was obtained.

### (3) Preparation of Non-Aqueous Electrolyte

LiPF₆ and optionally 1,3-propenesultone (PRES) were dissolved in a mixed solvent of EC, DMC, and MA (EC:DMC:MA = 20:60:20 (volume ratio)), and FEC was mixed. In this way, a non-aqueous electrolyte was prepared. The concentration of LiPF₆ in the non-aqueous electrolyte was set to 1.3 5 mol/L. The concentration of PRES (the concentration at the preparation of the non-aqueous electrolyte) in the non-aqueous electrolyte was set to a value (mass%) shown in Table 1. The concentration of FEC in the non-aqueous electrolyte was set to 1 mass%.

### (4) Production of Non-Aqueous Electrolyte Secondary Battery

A positive electrode lead made of Al was attached to the positive electrode obtained above, and a negative electrode lead made of Ni was attached to the negative electrode obtained above. The positive electrode and the negative electrode were spirally wound with a thin polyethylene film (separator) interposed therebetween in an inert gas atmosphere. In this way, a wound-type electrode group was produced. The electrode group was housed in an outer case in the form of a pouch formed using a laminate sheet including an Al layer. A predetermined amount of the above-described electrolyte solution was injected, and then the outer case was sealed. In this way, a non-aqueous electrolyte secondary battery was produced. When housing the electrode group in the outer case, a portion of the positive electrode lead and a portion of the negative electrode lead were exposed to the outside of the outer case.

### <<Evaluation>>

The obtained non-aqueous electrolyte secondary battery was subjected to the following evaluations.

### (1) Initial Capacity

In an environment at 45°C, constant current charge was performed at a current of 0.5C (180 mA) until the voltage of the non-aqueous electrolyte secondary battery reached 4.2 V After that, constant voltage charge was performed at a voltage of 4.2V until the current of the non-aqueous electrolyte secondary battery reached 0.05C (18 mA). After an interval of 10 minutes, constant current discharge was performed at a current of 0.7C (252 mA) until the voltage of the non-aqueous electrolyte secondary battery reached 2.5 V The discharge capacity (Ci) obtained at this time was determined as the initial capacity.

### (2) Cycle Characteristics

A series of operations of charging for obtaining the discharge capacity Ci, an interval, and discharging was defined as 1 cycle. This cycle was repeated 100 times, and the discharge capacity (Cc) at the 100th cycle was obtained. The ratio (%) of the discharge capacity Cc, with the initial discharge capacity Ci being set to 100%, was determined as the capacity retention rate, and used as an indication of cycle characteristics.

The results of the examples and the comparative examples are shown in Table 1. In Table 1, E1 to E3 represent Examples 1 to 3, and C1 to C8 represent Comparative Examples 1 to 8. The initial capacity is expressed by the ratio (%) of the initial capacity Ci of each example, with the initial capacity Ci of Comparative Example 1 being set to 100%.

**[Table 1]**

| | Negative electrode active material (mass%) | | | | Non-aqueous electrolyte | Initial capacity (%) | Cycle characteristics (%) |
|---|---|---|---|---|---|---|---|
| | Carbon composite particles | Silicon oxide | Silicate composite particles | Graphite particles | PRES (mass%) | | |
| E1 | 5 | 0 | 0 | 95 | 0.50 | 105 | 96 |
| E2 | 5 | 1 | 1 | 93 | 0.25 | 107 | 95 |
| E3 | 5 | 1 | 1 | 93 | 0.50 | 107 | 96 |
| C1 | 0 | 0 | 0 | 100 | 0 | 100 | 94 |
| C2 | 0 | 0 | 0 | 100 | 0.50 | 100 | 94 |
| C3 | 5 | 0 | 0 | 95 | 0 | 105 | 92 |
| C4 | 5 | 1 | 1 | 93 | 0 | 107 | 90 |
| C5 | 0 | 5 | 1 | 94 | 0.50 | 106 | 94 |
| C6 | 0 | 5 | 1 | 94 | 0 | 106 | 90 |
| C7 | 0 | 1 | 5 | 94 | 0.50 | 106 | 94 |
| C8 | 0 | 1 | 5 | 94 | 0 | 106 | 89 |

As shown in Table 1, in the case where the carbon composite particles in which a Si phase is dispersed in a carbon phase are used, a high initial capacity is obtained, but the cycle characteristics are lower than those in the case where a Si phase-free carbonaceous material is used as the negative electrode active material (cf. C1, C3, and C4). In the case where the negative electrode active material contains a silicon oxide in addition to the carbon composite particles, the reduction in the cycle characteristics increases (cf. C3 and C4).

On the other hand, in the case where only a Si phase-free carbonaceous material is used as the negative electrode active material, even when a non-aqueous electrolyte that contains a S-containing cyclic compound component is used, the initial capacity and the cycle characteristics are almost unchanged as compared with those when a non-aqueous electrolyte that does not contain a S-containing cyclic compound component is used (cf. C1 and C2).

In contrast, in the case where the carbon composite particles are used together with a non-aqueous electrolyte that contains a S-containing cyclic compound component, the reduction in the cycle characteristics is suppressed while maintaining the initial capacity at a high level, and excellent cycle characteristics can be obtained (cf. E1 to E3). This is considered to be because, by action of the S-containing cyclic compound component, a low resistant coating is formed on the surfaces of silicon-containing material particles including the carbon composite particles, as a result of which the high capacity of the negative electrode active material can be effectively used, without charge and discharge being inhibited, and the reduction in the capacity is suppressed even when charge and discharge are repeated.

In the case where a silicon oxide and silicate composite particles are used as the negative electrode active material, without using the carbon composite particles, a somewhat high initial capacity can be obtained, but the cycle characteristics are much lower than those of C1 (cf. C1, C6, and C8). When the negative electrode active material as described above is used together with a non-aqueous electrolyte that contains a S-containing cyclic compound component, the cycle characteristics are improved to some extent, but are almost the same as those of C1. From the results described above, it can be seen that, when a non-aqueous electrolyte that contains a S-containing cyclic compound component is used together with a negative electrode active material that contains the carbon composite particles, a particularly excellent effect of improving the cycle characteristics can be obtained.

The present invention has been described in terms of the presently preferred embodiment, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

### [Industrial Applicability]

The non-aqueous electrolyte secondary battery of the present disclosure is useful as a main power source for a mobile communication device, a portable electronic device, or the like. However, these are merely examples, and thus the application of the non-aqueous electrolyte secondary battery is not limited thereto.

### [Reference Signs List]

1: electrode group
2: positive electrode lead
3: negative electrode lead
4: battery case
5: sealing plate
6: negative electrode terminal
7: gasket
8: sealing cap

## Claims

1. A non-aqueous electrolyte secondary battery comprising:
a negative electrode that contains a negative electrode material mixture;
a separator;
a positive electrode that is provided to oppose the negative electrode via the separator; and
a non-aqueous electrolyte,
wherein the negative electrode material mixture contains a negative electrode active material,
the negative electrode active material contains 3 mass% or more of a silicon-containing material,
the silicon-containing material contains carbon composite particles,
the carbon composite particles have a carbon phase and a silicon phase dispersed in the carbon phase, and
the non-aqueous electrolyte contains a 5- or 6-membered cyclic compound component that contains a sulfur element as a ring-constituting element.

2. The non-aqueous electrolyte secondary battery in accordance with claim 1,
wherein the silicon-containing material further contains a silicon oxide.

3. The non-aqueous electrolyte secondary battery in accordance with claim 1 or 2,
wherein the silicon-containing material further contains silicate composite particles, and
the silicate composite particles have a silicate phase and a silicon phase dispersed in the silicate phase.

4. The non-aqueous electrolyte secondary battery in accordance with any one of claims 1 to 3,
wherein the cyclic compound component includes a cyclic compound that contains the sulfur element as the ring-constituting element and that has a carbon-carbon unsaturated bond.

5. The non-aqueous electrolyte secondary battery in accordance with any one of claims 1 to 4,
wherein the cyclic compound component contains 1,3-propenesultone.

6. The non-aqueous electrolyte secondary battery in accordance with any one of claims 1 to 5,
wherein the concentration of the cyclic compound component in the non-aqueous electrolyte is 2 mass% or less.

7. The non-aqueous electrolyte secondary battery in accordance with any one of claims 1 to 6,
wherein the negative electrode material mixture further contains carbon nanotubes.

8. The non-aqueous electrolyte secondary battery in accordance with any one of claims 1 to 7,
wherein the non-aqueous electrolyte further contains a fluoroethylene carbonate.
